(19) Europäisches Patentamt
European Patent Office
Office européen des brevets

(11) **EP 4 147 381 B1**

(12) **EUROPÄISCHE PATENTSCHRIFT**

(45) Veröffentlichungstag und Bekanntmachung des Hinweises auf die Patenterteilung:
**17.09.2025 Patentblatt 2025/38**

(21) Anmeldenummer: **21720175.5**

(22) Anmeldetag: **14.04.2021**

(51) Internationale Patentklassifikation (IPC):
**H04B 10/532** (2013.01) **H03C 7/04** (2006.01)
**H04B 10/114** (2013.01)

(52) Gemeinsame Patentklassifikation (CPC):
**H04B 10/1141; H04B 10/532**

(86) Internationale Anmeldenummer:
**PCT/EP2021/025137**

(87) Internationale Veröffentlichungsnummer:
**WO 2021/223905 (11.11.2021 Gazette 2021/45)**

(54) **VERFAHREN UND SYSTEM ZUR DATENÜBERTRAGUNG MITTELS LICHT**

METHOD AND SYSTEM FOR DATA TRANSMISSION BY MEANS OF LIGHT

PROCÉDÉ ET SYSTÈME DE TRANSMISSION DE DONNÉES AU MOYEN DE LUMIÈRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.05.2020 DE 102020002653**

(43) Veröffentlichungstag der Anmeldung:
**15.03.2023 Patentblatt 2023/11**

(73) Patentinhaber: **SEW-EURODRIVE GmbH & Co. KG
76646 Bruchsal (DE)**

(72) Erfinder:
• **HUA, Zhidong**
**76646 Bruchsal (DE)**
• **KLEIS, Ruben**
**76137 Karlsruhe (DE)**
• **SCHÄFER, Thomas**
**76689 Karlsdorf-Neuthard (DE)**
• **SCHMIDT, Josef**
**76676 Graben-Neudorf (DE)**

(56) Entgegenhaltungen:
EP-A1- 1 026 840      EP-A2- 0 955 738
EP-B1- 1 026 840      CN-A- 107 831 470
US-A1- 2018 240 338   US-B1- 6 310 707

**Beschreibung**

Die Erfindung betrifft ein Verfahren zur Datenübertragung mittels Licht, wobei ein Sender Licht aussendet, in welchem die zu übertragenden Daten codiert sind, und ein Empfänger von dem Sender ausgesendetes Licht empfängt. Die Erfindung betrifft auch ein System zur Datenübertragung mittels Licht, umfassend einen Sender zum Aussenden von Licht, in welchem die zu übertragenden Daten codiert sind, und einen Empfänger zum Empfangen von von dem Sender ausgesendetem Licht.

Aus der DE 10 2016 010 999 A1 sind ein System und ein Verfahren zur Positionsbestimmung eines Fahrzeugs innerhalb einer Anlage bekannt. Das System weist dabei ein Fahrzeug mit einem Empfangsmodul und ein stationär angeordnetes Sendemodul auf. Das Sendemodul weist eine Lichtquelle und ein erstes Polarisationsfilter auf, wobei das erste Polarisationsfilter als lineares Polarisationsfilter ausgeführt ist, so dass linear polarisiertes Licht vom Sendemodul aussendbar ist. Das Empfangsmodul weist einen Lichtsensor, einen Flüssigkristall und ein zweites Polarisationsfilter auf, wobei das zweite Polarisationsfilter als lineares Polarisationsfilter ausgeführt ist.

Aus der DE 10 2018 006 988 B3 sind ein System und ein Verfahren zur Datenübertragung mittels sichtbarem Licht bekannt. Das System weist einen Empfänger mit einem Bildsensor, dessen lichtsensitive Fläche zeilenweise abgetastet wird, und einen Sender mit einem steuerbaren Leuchtmittel, welches moduliertes Licht abstrahlt, auf.

Die US 6,310,707 B1 offenbart ein optisches drahtloses Datenübertragungssystem mit einem Sender, welcher eine oder mehrere Lichtquellen zum Aussenden von verschiedenartigem Licht aufweist, und mit einem Empfänger, welcher einen oder mehrere Bereiche zum Empfang des Lichts aufweist.

Die DE 699 01 158 T2 sowie die EP 1 026 840 A1 offenbaren ein Verfahren zur Übertragung von Informationen auf einem Lichtsignal, wobei ein Polarisationswert des Lichtsignals auf verschiedene Werte, abhängig von zu übertragenden Informationswerten, eingestellt wird.

Das Dokument DE 10 2014 209 901 A1 beschreibt eine Kommunikationsvorrichtung für die optische Freiraumübertragung von Daten mit einem Retroreflektor, wobei der Retroreflektor eine integrierte Modulationsvorrichtung aufweist, mit der ein einfallender Lichtstrahl moduliert wird.

Aus der CN 107831470 A sind ein polarisationsbasiertes Verfahren zur Lichtübertragung und ein entsprechendes System bekannt.

Die EP 0 955 738 A2 offenbart einen polarisationsbasierten Empfänger zur Reduktion von Hintergrundrauschen in optischen Verbindungen.

Die US 2018/0240338 A1 offenbart eine Kommunikationsvorrichtung für Kraftfahrzeuge. Die Kommunikationsvorrichtung umfasst ein Übertragungssystem zum Aussenden eines polarisierten Lichtstrahls.

Der Erfindung liegt die Aufgabe zugrunde, ein Verfahren und ein System zur Datenübertragung mittels Licht zu verbessern.

Die Aufgabe wird durch ein Verfahren zur Datenübertragung mittels Licht mit den in Anspruch 1 angegebenen Merkmalen gelöst. Vorteilhafte Ausgestaltungen und Weiterbildungen sind Gegenstand der Unteransprüche. Die Aufgabe wird auch durch ein System zur Datenübertragung mittels Licht mit den in Anspruch 8 angegebenen Merkmalen gelöst. Vorteilhafte Ausgestaltungen und Weiterbildungen sind Gegenstand der Unteransprüche.

In einem erfindungsgemäßen Verfahren zur Datenübertragung mittels Licht sendet ein Sender Licht aus, in welchem die zu übertragenden Daten codiert sind, und ein Empfänger empfängt von dem Sender ausgesendetes Licht.

Der Sender umfasst ein Datenfeld, welches mindestens ein Datenelement aufweist, wobei das mindestens eine Datenelement Licht mit einer bestimmten Datenpolarisation aussendet. Dabei sind die zu übertragenden Daten in der Datenpolarisation des von dem mindestens einen Datenelement ausgesendeten Lichts codiert. Der Empfänger umfasst eine Polarisationseinheit, welche die jeweilige Datenpolarisation des von dem mindestens einen Datenelement ausgesendeten Lichts erkennt. Der Empfänger umfasst auch eine Auswerteeinheit, welche aus der von der Polarisationseinheit erkannten Datenpolarisation des von dem mindestens einen Datenelement ausgesendeten Lichts die zu übertragenden Daten des mindestens einen Datenelements decodiert.

Das mindestens eine Datenelement weist also eine Datenpolarisation auf, welche eine Polarisationsrichtung des von dem mindestens einen Datenelement ausgesendeten Lichts darstellt. Jedem bestimmten Datum ist dabei eine bestimmte Datenpolarisation eindeutig zugeordnet. Die Datenpolarisation ist dabei nicht nur auf horizontal und vertikal beschränkt, sondern kann eine feinere Auflösung aufweisen. In Abhängigkeit von einer Auflösung der Datenpolarisation sind somit mehrere unterschiedliche Daten von einem Datenelement übertragbar. Beispielsweise ist eine Auflösung von acht oder mehr unterschiedlichen Datenpolarisationen über einen Winkelbereich von 180° denkbar. Die Auswerteeinheit decodiert die zu übertragenden Daten beispielsweise ausschließlich aus der erkannten Datenpolarisation. Es ist aber auch denkbar, dass die Auswerteeinheit die zu übertragenden Daten aus einer Verknüpfung der erkannten Datenpolarisation und einer weiteren Polarisation decodiert.

Vorteilhat ist die Datenpolarisation des ausgesendeten Lichts auch bei einer verhältnismäßig großen Entfernung zwischen dem Sender und dem Empfänger verhältnismäßig genau messbar. Weiterhin treten beim Empfang des von dem Sender ausgesendeten Lichts nur geringe perspektivische Verzerrungen auf.

Erfindungsgemäß umfasst das Datenfeld mindestens eine Datenreihe, welche eine Mehrzahl von Datenelementen aufweist. Dabei sendet jedes der Datenelemente Licht mit einer bestimmten Datenpolarisation aus. Dabei sind die zu übertragenden Daten in den Datenpolarisationen des von den Datenelementen ausgesendeten Lichts codiert. Die Polarisationseinheit erkennt die Datenpolarisationen des von den Datenelementen ausgesendeten Lichts. Durch die Verwendung der Mehrzahl von Datenelementen, welche jeweils eine eigene Datenpolarisation aufweisen, ist auch eine Mehrzahl von Daten im Vergleich zu nur einem Datenelement übertragbar.

Erfindungsgemäß weist die Datenreihe ein Referenzelement auf, welches Licht mit einer Referenzpolarisation aussendet. Dabei erkennt die Polarisationseinheit die Referenzpolarisation des von dem Referenzelement ausgesendeten Lichts. Die Auswerteeinheit decodiert aus einer Verknüpfung der Datenpolarisationen des von den Datenelementen ausgesendeten Lichts und der Referenzpolarisation des von dem Referenzelement ausgesendeten Lichts die zu übertragenden Daten der Datenelemente.

Das Referenzelement weist also eine Referenzpolarisation auf, welche als Bezugsrichtung für die relative Ausrichtung der Datenpolarisation jedes einzelnen Datenelements der Datenreihe dient. Die Verknüpfung der Datenpolarisation und der Referenzpolarisation ist beispielsweise die Differenz aus der Datenpolarisation des einzelnen Datenelements und der Referenzpolarisation. Somit ist die Decodierung der zu übertragenden Daten unabhängig von einer Ausrichtung des Empfängers zu dem Sender.

Gemäß einer anderen vorteilhaften Ausgestaltung der Erfindung weist die Datenreihe ein Referenzelement auf, welches Licht mit einer Referenzpolarisation aussendet. Dabei erkennt die Polarisationseinheit die Referenzpolarisation des von dem Referenzelement ausgesendeten Lichts. Die Auswerteeinheit decodiert aus einer Verknüpfung der Datenpolarisation eines von einem ersten Datenelement ausgesendeten Lichts und der Referenzpolarisation des von dem Referenzelement ausgesendeten Lichts die zu übertragenden Daten des ersten Datenelements. Die Auswerteeinheit decodiert aus einer Verknüpfung der Datenpolarisation eines von einem nachfolgenden Datenelement ausgesendeten Lichts und der Datenpolarisation eines von einem vorhergehenden Datenelement ausgesendeten Lichts die zu übertragenden Daten des nachfolgenden Datenelements.

Das Referenzelement weist also eine Referenzpolarisation auf, welche als Bezugsrichtung für die relative Ausrichtung der Datenpolarisation des ersten Datenelements der Datenreihe dient. Die Verknüpfung der Datenpolarisation des ersten Datenelements und der Referenzpolarisation ist beispielsweise die Differenz aus der Datenpolarisation des ersten Datenelements und der Referenzpolarisation. Die Datenpolarisation eines vorhergehenden, beispielsweise des ersten, Datenelements der Datenreihe dient als Bezugsrichtung für die relative Ausrichtung der Datenpolarisation eines nachfolgenden, beispielsweise des zweiten, Datenelements. Die Verknüpfung der Datenpolarisation des nachfolgenden Datenelements und der Datenpolarisation des vorhergehenden Datenelements ist beispielsweise die Differenz aus der Datenpolarisation des zweiten Datenelements und der Datenpolarisation des ersten Datenelements. Somit ist die Decodierung der zu übertragenden Daten unabhängig von einer Ausrichtung des Empfängers zu dem Sender.

Gemäß einer vorteilhaften Weiterbildung der Erfindung weist die Datenreihe ein Trennelement auf, welches Licht mit einer Trennpolarisation oder unpolarisiertes Licht aussendet. Das Trennelement unterscheidet sich somit von den Datenelementen und dem Referenzelement, welche Licht mit anderen Polarisationen aussenden. Das Trennelement dient somit als Bezug für die Datenreihe.

Gemäß einer bevorzugten Ausgestaltung der Erfindung sind die Elemente der Datenreihe in einer Längsrichtung nebeneinander angeordnet. Dabei ist vorzugsweise das Trennelement zwischen dem Referenzelement und den Datenelementen angeordnet.

Vorzugsweise weisen die Elemente der Datenreihe eine gleiche Länge in der Längsrichtung auf. Das Trennelement, das die Trennpolarisation oder keine Polarisation aufweist, dient dabei vorteilhaft als Maß für die Länge der Elemente in der Längsrichtung.

Vorzugsweise weisen die Elemente der Datenreihe eine gleiche Breite in einer Querrichtung auf, welche rechtwinklig zu der Längsrichtung verläuft. Bevorzugt ist dabei die Länge gleich der Breite. Die Elemente sind somit quadratisch ausgebildet. Es ist aber auch denkbar, dass die Elemente beispielsweise rechteckig oder rund ausgebildet sind.

Gemäß einer vorteilhaften Weiterbildung der Erfindung umfasst das Datenfeld eine Mehrzahl von Datenreihen. Dabei sind die Datenreihen in einer Querrichtung nebeneinander angeordnet, welche rechtwinklig zu der Längsrichtung verläuft. Durch die Verwendung der Mehrzahl von Datenreihen ist auch eine Mehrzahl von Daten im Vergleich zu nur einer Datenreihe übertragbar.

Ein erfindungsgemäßes System zur Datenübertragung mittels Licht umfasst einen Sender zum Aussenden von Licht, in welchem die zu übertragenden Daten codiert sind, und einen Empfänger zum Empfangen von von dem Sender ausgesendetem Licht. Das erfindungsgemäße System ist dabei zur Ausführung des erfindungsgemäßen Verfahrens eingerichtet.

Gemäß einer vorteilhaften Weiterbildung der Erfindung weist der Sender eine Lichtquelle auf, welche das Datenfeld durchstrahlt. Das mindestens eine Datenelement wirkt dabei wie ein Polarisationsfilter und lässt nur Licht mit einer bestimmten Datenpolarisation durch.

Gemäß einer anderen vorteilhaften Weiterbildung der Erfindung ist das Datenfeld als Reflektor ausgebildet. Dabei reflektiert das mindestens eine Datenelement Licht mit einer bestimmten Datenpolarisation.

Gemäß einer vorteilhaften Ausgestaltung der Erfindung ist der Empfänger in oder an einem autonom fahrenden Fahrzeug angeordnet, welches eine Antriebseinrichtung, einen elektrischen Energiespeicher zur Versorgung der Antriebseinrichtung sowie eine Steuereinheit zur Steuerung der Antriebseinrichtung aufweist. Die Antriebseinrichtung umfasst beispielsweise einen Elektromotor, ein Getriebe und Antriebsräder. Bei dem autonom fahrenden Fahrzeug handelt es sich insbesondere um ein fahrerloses Transportsystem zum Transport von Gegenständen innerhalb einer technischen Anlage.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:

Figur 1:  eine schematische Darstellung eines Systems zur Datenübertragung mittels Licht,

Figur 2:  ein Datenfeld in einer ersten Ausrichtung,

Figur 3:  ein Datenfeld in einer zweiten Ausrichtung,

Figur 4:  eine beispielhafte Zuordnung von Daten zu Datenpolarisationen,

Figur 5:  ein autonom fahrendes Fahrzeug gemäß einer ersten Ausführung,

Figur 6:  ein autonom fahrendes Fahrzeug gemäß einer zweiten Ausführung und

Figur 7:  ein autonom fahrendes Fahrzeug gemäß einer dritten Ausführung.

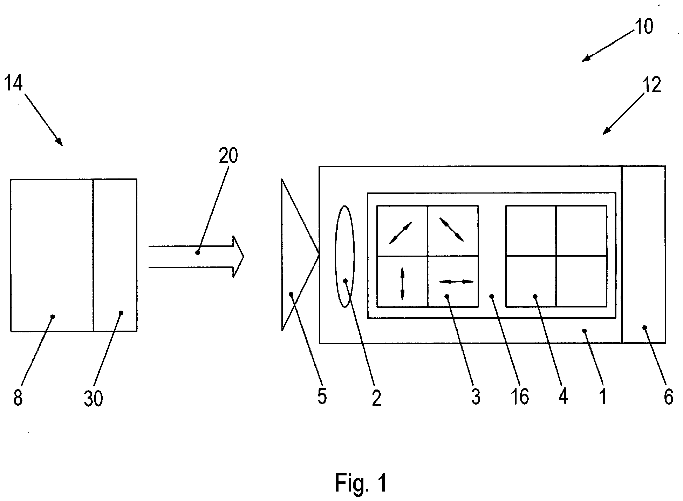

Figur 1 zeigt eine schematische Darstellung eines Systems 10 zur Datenübertragung mittels Licht 20. Das System 10 zur Datenübertragung mittels Licht 20 umfasst einen Sender 14, welcher Licht 20 aussendet, in welchem die zu übertragenden Daten codiert sind, und einen Empfänger 12, welcher von dem Sender 14 ausgesendetes Licht 20 empfängt.

Der Sender 14 umfasst ein Datenfeld 30. Das Datenfeld 30 weist mehrere Datenelemente 51 auf, welche Licht 20 mit bestimmten Datenpolarisationen Θ aussenden. Die zu übertragenden Daten sind in den Datenpolarisationen Θ des von den Datenelementen 51 ausgesendeten Lichts 20 codiert. Der Sender 14 weist vorliegend eine Lichtquelle 8 auf. Bei der Lichtquelle 8 handelt es sich beispielsweise um eine LED, eine Deckenlampe oder eine Glühbirne, welche unpolarisiertes Licht abstrahlt. Die Lichtquelle 8 durchstrahlt das Datenfeld 30, wobei die Datenelemente 51 wie Polarisationsfilter wirken und nur jeweils Licht 20 mit einer bestimmten Datenpolarisation Θ durchlassen. Die Lichtquelle 8 kann auch entfallen. In diesem Fall ist das Datenfeld 30 als Reflektor ausgebildet, wobei die Datenelemente 51 jeweils Licht 20 mit einer bestimmten Datenpolarisation Θ reflektieren.

Der Empfänger 12 umfasst eine Polarisationskamera 1, welche in der Lage ist, eine Polarisation von einfallendem Licht 20 mit einer Winkelauflösung von beispielsweise 1° zu erkennen. Die Polarisationskamera 1 weist eine optische Linse 2 und eine Polarisationseinheit 16 auf. Der Empfänger 12 umfasst auch eine Blende 5. Die Blende 5 und die Linse 2 sind derart angeordnet, dass Licht 20, welches auf die Polarisationseinheit 16 auftrifft, zuvor die Blende 5 und die Linse 2 passiert.

Die Polarisationseinheit 16 der Polarisationskamera 1 erkennt die jeweilige Datenpolarisation Θ des von den Datenelementen 51 des Datenfeldes 30 ausgesendeten Lichts 20. Die Polarisationseinheit 16 umfasst ein Polarisationsfilter 3, welches Bereiche aufweist, die jeweils Licht 20 mit unterschiedlicher Polarisation durchlassen, und einen Pixelblock 4, auf welchen von den besagten Bereichen des Polarisationsfilters 3 durchgelassenes Licht 20 auftrifft.

Der Empfänger 12 umfasst auch eine Auswerteeinheit 6. Die Auswerteeinheit 6 decodiert aus den Datenpolarisationen Θ des von den Datenelementen 51 ausgesendeten Lichts 20, welche die Polarisationseinheit 16 erkennt, die zu übertragenden Daten der Datenelemente 51. Die Auswerteeinheit 6 ist beispielsweise in Form eines Digitalrechners, eines Prozessors oder eines FPGA ausgeführt.

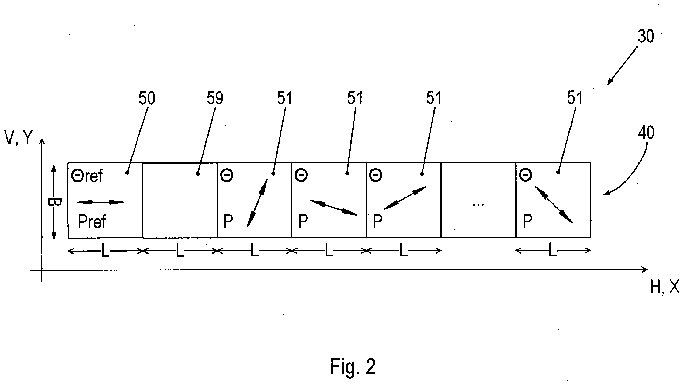

Figur 2 zeigt ein Datenfeld 30 eines Senders 12 in einer ersten Ausrichtung. Das Datenfeld 30 umfasst eine Datenreihe 40, welche eine Mehrzahl von Datenelementen 51 aufweist. Jedes der Datenelemente 51 sendet Licht 20 mit einer bestimmten Datenpolarisation Θ aus. Die zu übertragenden Daten sind in den Datenpolarisationen Θ des von den Datenelementen 51 ausgesendeten Lichts 20 codiert.

Die Datenreihe 40 weist auch ein Referenzelement 50 auf, welches Licht 20 mit einer Referenzpolarisation Θref aussendet. Die Datenreihe 40 weist ferner ein Trennelement 59 auf, welches unpolarisiertes Licht 20 aussendet. Die Datenelemente 51, das Referenzelement 50 und das Trennelement 59 der Datenreihe 40 sind in einer Längsrichtung X nebeneinander angeordnet.

Die Elemente 50, 51, 59 der Datenreihe 40 weisen eine gleiche Länge L in der Längsrichtung X auf. Die Elemente 50, 51, 59 der Datenreihe 40 weisen ferner eine gleiche Breite B in einer Querrichtung Y auf, welche rechtwinklig zu der Längsrichtung X verläuft. Die Elemente 50, 51, 59 der Datenreihe 40 sind vorliegend rechteckig ausgestaltet. Auch andere Ausgestaltungen der Elemente 50, 51, 59 sind denkbar. Ferner ist denkbar, dass das Datenfeld 30 eine Mehrzahl von Datenreihen 40 umfasst, welche insbesondere in der Querrichtung Y nebeneinander angeordnet sind.

Die Polarisationseinheit 16 des Empfängers 12 erfasst Scheinpolarisationen P des von den Datenelementen 51 ausgesendeten Lichts 20 und eine Scheinreferenzpolarisation Pref des von dem Referenzelement 50 ausgesendeten Lichts 20. Ferner erkennt die Polarisationseinheit 16 das unpolarisierte Licht 20, welches das Trennelement 59 aussendet. Die Polarisationseinheit 16 weist ein Sichtfeld auf, welches sich in eine Horizontalrichtung H und in eine dazu rechtwinklige Vertikalrichtung V erstreckt.

Die Datenpolarisationen Θ der Datenelemente 51 und die Referenzpolarisation Θref des Referenzelements 50 sind in Bezug auf die Längsrichtung X definiert. Die Polarisationseinheit 16 erfasst die Scheinpolarisationen P und die Scheinreferenzpolarisation Pref jedoch in Bezug auf die Horizontalrichtung H. Die Referenzpolarisation Θref verläuft vorliegend parallel zu der Längsrichtung X und beträgt somit 0°.

In der hier in Figur 2 gezeigten Darstellung befindet sich das Datenfeld 30 des Senders 12 in einer ersten Ausrichtung, in welcher die Längsrichtung X parallel zu der Horizontalrichtung H verläuft und die Querrichtung Y parallel zu der Vertikalrichtung V verläuft. Die Referenzpolarisation Θref des Referenzelements 50 verläuft somit in Längsrichtung X und in Horizontalrichtung H. Die Scheinreferenzpolarisation Pref entspricht daher der Referenzpolarisation Θref und beträgt somit ebenfalls 0°.

Die von der Polarisationseinheit 16 erfassten Scheinpolarisationen P in Bezug auf die Horizontalrichtung H entsprechen somit den Datenpolarisationen Θ der Datenelemente 51 in Bezug auf die Längsrichtung X. Die Polarisationseinheit 16 erkennt somit die Datenpolarisationen Θ der Datenelemente 51 als die erfassten Scheinpolarisationen P.

Für die erkannten Datenpolarisationen Θ der Datenelemente 51 gilt also:

$$\Theta = P$$

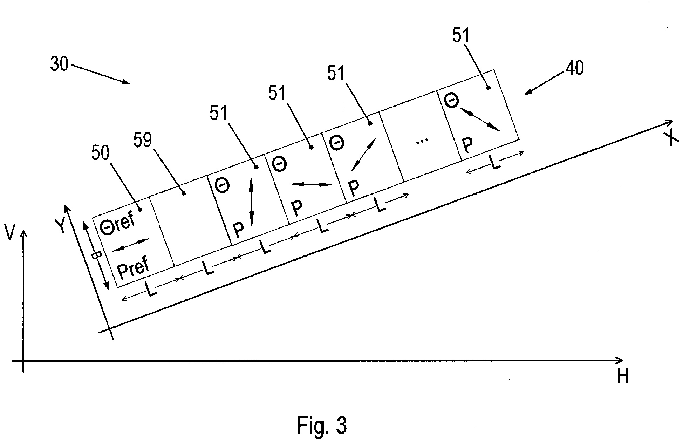

Figur 3 zeigt ein Datenfeld 30 eines Senders 12 in einer zweiten Ausrichtung. In der hier gezeigten Darstellung befindet sich das Datenfeld 30 des Senders 12 in einer zweiten Ausrichtung, in welcher die Längsrichtung X geneigt zu der Horizontalrichtung H verläuft und die Querrichtung Y geneigt zu der Vertikalrichtung V verläuft. Die Referenzpolarisation Θref des Referenzelements 50 verläuft somit zwar in Längsrichtung X, aber geneigt zu der Horizontalrichtung H. Die Scheinreferenzpolarisation Pref verläuft somit ebenfalls geneigt zu der Referenzpolarisation Θref.

Die von der Polarisationseinheit 16 erfassten Scheinpolarisationen P in Bezug auf die Horizontalrichtung H sind zu den Datenpolarisationen Θ der Datenelemente 51 in Bezug auf die Längsrichtung X um die Scheinreferenzpolarisation Pref geneigt. Die Polarisationseinheit 16 erkennt somit die Datenpolarisationen Θ der Datenelemente 51 als Differenz aus den erfassten Scheinpolarisationen P und der erfassten Scheinreferenzpolarisation Pref.

Für die erkannten Datenpolarisationen Θ der Datenelemente 51 gilt also:

$$\Theta = P - P_{ref}$$

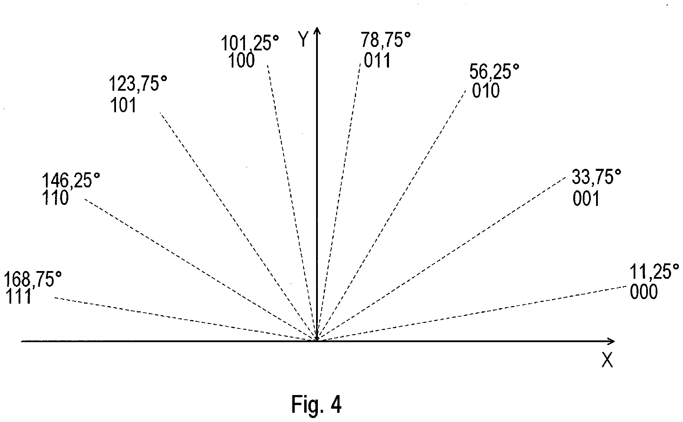

Figur 4 zeigt eine beispielhafte Zuordnung von Daten d zu Datenpolarisationen Θ. Jedes Datenelement 51 überträgt dabei ein Datum d mit m Bit.

Die Datenpolarisation Θ des jeweiligen Datenelements 51 errechnet sich beispielsweise für alle Datenelemente 51 der Datenreihe folgendermaßen:

$$\Theta = (2d + 1) * 180° / 2^{(m+1)}$$

In diesem Fall decodiert die Auswerteeinheit 6 aus der von der Polarisationseinheit 16 erkannten Datenpolarisation Θ der Datenelemente 51 die zu übertragenden Daten d der Datenelemente 51.

Es ist auch denkbar, dass die Datenpolarisation Θ der Datenelemente 51 sich in Abhängigkeit von der Referenzpolarisation Θref des Referenzelements 50 berechnet, beispielsweise folgendermaßen:

$$\Theta \qquad = \qquad \Theta ref + (2d +1) * 180° / 2^{(m+1)}$$

In diesem Fall decodiert die Auswerteeinheit 6 aus einer Verknüpfung der Datenpolarisationen $\Theta$ der Datenelemente 51 und der Referenzpolarisation Oref des Referenzelements 50 die zu übertragenden Daten d der Datenelemente 51.

Ferner ist denkbar, dass die Datenpolarisation $\Theta$ des ersten Datenelemente 51 sich in Abhängigkeit von der Referenzpolarisation $\Theta ref$ des Referenzelements 50 berechnet, beispielsweise folgendermaßen:

$$\Theta \qquad = \qquad ( \Theta ref + (2d +1) * 180° / 2^{(m+1)} ) \bmod 180°$$

und dass die Datenpolarisation $\Theta nach$ eines nachfolgenden Datenelements 51 sich in Abhängigkeit von der Datenpolarisation $\Theta vor$ eines vorhergehenden Datenelements 51 berechnet, beispielsweise folgendermaßen:

$$\Theta nach \quad = \qquad ( \Theta vor + (2d +1) * 180° / 2^{(m+1)} ) \bmod 180°$$

In diesem Fall decodiert die Auswerteeinheit 6 aus einer Verknüpfung der Datenpolarisation $\Theta$ des ersten Datenelements 51 und der Referenzpolarisation $\Theta ref$ des Referenzelements 50 die zu übertragenden Daten des ersten Datenelements 51. Ebenso decodiert die Auswerteeinheit 6 aus einer Verknüpfung der Datenpolarisation $\Theta$ eines nachfolgenden, beispielsweise des zweiten, Datenelements 51 und der Datenpolarisation $\Theta$ eines vorhergehenden, beispielsweise des ersten, Datenelements 51 die zu übertragenden Daten des nachfolgenden Datenelements 51.

Jedem bestimmten Datum d mit $0 \leq d < 2^m$ ist dabei eine bestimmte Datenpolarisation $\Theta$ mit $0° < \Theta < 180°$ eindeutig zugeordnet. Die beispielhafte Zuordnung von Daten d zu Datenpolarisationen $\Theta$ ist für m = 3 in Figur 4 in einem Diagramm dargestellt. Dabei sind die Daten d als dreistellige Binärzahlen dargestellt, und die zugeordneten Datenpolarisationen $\Theta$ sind als Winkel angegeben.

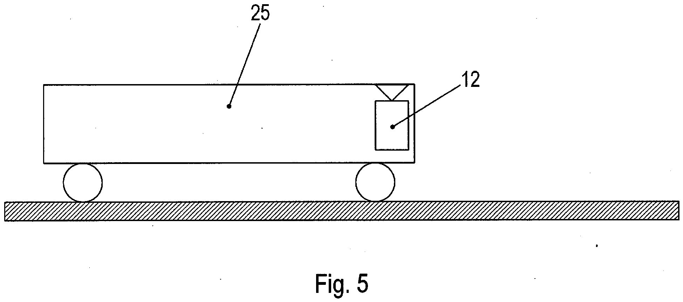

Figur 5 zeigt ein autonom fahrendes Fahrzeug 25 gemäß einer ersten Ausführung. Das Fahrzeug 25 weist eine Antriebseinrichtung, einen elektrischen Energiespeicher zur Versorgung der Antriebseinrichtung sowie eine Steuereinheit zur Steuerung der Antriebseinrichtung auf. Das Fahrzeug 25 befindet sich auf einem horizontal ausgerichteten Boden.

Das Fahrzeug 25 weist einen Empfänger 25 auf. Der Empfänger 12 ist vertikal ausgerichtet. Licht 20, welches beispielsweise von einem Sender 14 ausgesendet wird, der an einer Decke oberhalb des Fahrzeugs 25 montiert ist, ist von dem Empfänger 12 empfangbar.

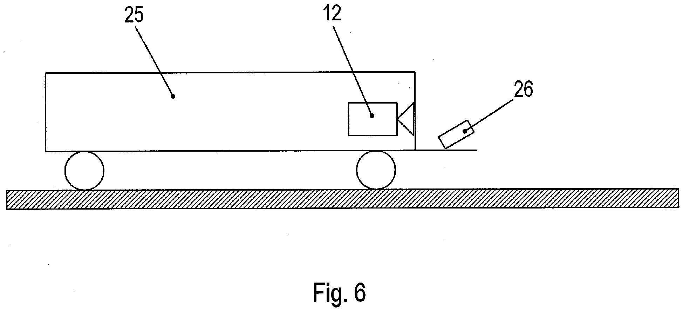

Figur 6 zeigt ein autonom fahrendes Fahrzeug 25 gemäß einer zweiten Ausführung. Das Fahrzeug 25 weist eine Antriebseinrichtung, einen elektrischen Energiespeicher zur Versorgung der Antriebseinrichtung sowie eine Steuereinheit zur Steuerung der Antriebseinrichtung auf. Das Fahrzeug 25 befindet sich auf einem horizontal ausgerichteten Boden.

Das Fahrzeug 25 weist einen Empfänger 25 auf. Der Empfänger 12 ist horizontal ausgerichtet. Das Fahrzeug 25 weist ferner einen Spiegel 26 auf. Der Spiegel 26 ist derart angeordnet und ausgerichtet, dass Licht 20, welches beispielsweise von einem Sender 14 ausgesendet wird, der an einer Decke oberhalb des Fahrzeugs 25 montiert ist, von dem Spiegel 26 umgelenkt wird und von dem Empfänger 12 empfangbar ist.

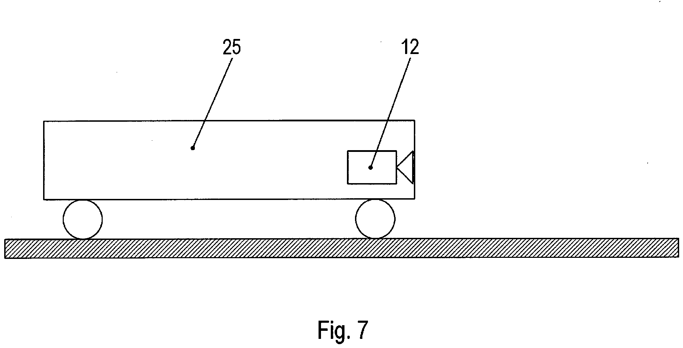

Figur 7 zeigt ein autonom fahrendes Fahrzeug 25 gemäß einer dritten Ausführung. Das Fahrzeug 25 weist eine Antriebseinrichtung, einen elektrischen Energiespeicher zur Versorgung der Antriebseinrichtung sowie eine Steuereinheit zur Steuerung der Antriebseinrichtung auf. Das Fahrzeug 25 befindet sich auf einem horizontal ausgerichteten Boden.

Das Fahrzeug 25 weist einen Empfänger 25 auf. Der Empfänger 12 ist horizontal ausgerichtet. Licht 20, welches beispielsweise von einem Sender 14 ausgesendet wird, der an einer Wand auf Höhe des Fahrzeugs 25 montiert ist, ist von dem Empfänger 12 empfangbar.

**Bezugszeichenliste**

| | |
|---|---|
| 1 | Polarisationskamera |
| 2 | Linse |
| 3 | Polarisationsfilter |
| 4 | Pixelblock |
| 5 | Blende |
| 6 | Auswerteeinheit |

| | |
|---|---|
| 8 | Lichtquelle |
| 10 | System |
| 12 | Empfänger |
| 14 | Sender |
| 16 | Polarisationseinheit |
| 20 | Licht |
| 25 | Fahrzeug |
| 26 | Spiegel |
| 30 | Datenfeld |
| 40 | Datenreihe |
| 50 | Referenzelement |
| 51 | Datenelement |
| 59 | Trennelement |
| B | Breite |
| L | Länge |
| H | Horizontalrichtung |
| V | Vertikalrichtung |
| X | Längsrichtung |
| Y | Querrichtung |
| $\Theta$ | Datenpolarisation |
| $\Theta$ref | Referenzpolarisation |
| P | Scheinpolarisation |
| Pref | Scheinreferenzpolarisation |

**Patentansprüche**

1. Verfahren zur Datenübertragung mittels Licht (20), wobei

ein Sender (14) Licht (20) aussendet, in welchem die zu übertragenden Daten codiert sind, und ein Empfänger (12) von dem Sender (14) ausgesendetes Licht (20) empfängt, wobei
der Sender (14) ein Datenfeld (30) umfasst, welches mindestens ein Datenelement (51) aufweist, wobei
das mindestens eine Datenelement (51) Licht (20) mit einer bestimmten Datenpolarisation ($\Theta$) aussendet, wobei
die zu übertragenden Daten in der Datenpolarisation ($\Theta$) des von dem mindestens einen Datenelement (51) ausgesendeten Lichts (20) codiert sind, und wobei
der Empfänger (12) eine Polarisationseinheit (16) umfasst, welche
die jeweilige Datenpolarisation ($\Theta$) des von dem mindestens einen Datenelement (51) ausgesendeten Lichts (20) erkennt, und wobei
der Empfänger (12) eine Auswerteeinheit (6) umfasst, welche
aus der von der Polarisationseinheit (16) erkannten Datenpolarisation ($\Theta$) des von dem mindestens einen Datenelement (51) ausgesendeten Lichts (20) die zu übertragenden Daten des mindestens einen Datenelements (51) decodiert,
wobei das mindestens eine Datenelement (51) eine Datenpolarisation ($\Theta$) aufweist, welche eine Polarisationsrichtung des von dem mindestens einen Datenelement (51) ausgesendeten Lichts (20) darstellt, und dass jedem bestimmten Datum eine bestimmte Datenpolarisation ($\Theta$) eindeutig zugeordnet ist, **dadurch gekennzeichnet, dass**
das Datenfeld (30) mindestens eine Datenreihe (40) umfasst,
welche eine Mehrzahl von Datenelementen (51) aufweist, wobei
jedes der Datenelemente (51) Licht (20) mit einer bestimmten Datenpolarisation ($\Theta$) aussendet, und wobei
die Polarisationseinheit (16) die Datenpolarisationen ($\Theta$) des von den Datenelementen (51) ausgesendeten Lichts (20) erkennt, und dass
die Elemente (50, 51) der Datenreihe (40) in einer Längsrichtung (X) nebeneinander angeordnet sind, und dass
die Datenreihe (40) ein Referenzelement (50) aufweist, welches Licht (20) mit einer Referenzpolarisation ($\Theta$ref) aussendet, wobei
die Polarisationseinheit (16) die Referenzpolarisation ($\Theta$ref) des von dem Referenzelement (50) ausgesendeten Lichts (20) erkennt, und dass
die Auswerteeinheit (16) aus einer Verknüpfung der Datenpolarisationen ($\Theta$) des von den Datenelementen (51) ausgesendeten Lichts (20) und der Referenzpolarisation (Oref) des von dem Referenzelement (50) ausgesendeten Lichts (20)
die zu übertragenden Daten der Datenelemente (51) decodiert.

2. Verfahren nach Anspruch 1, **dadurch gekennzeichnet, dass** die Auswerteeinheit (6) aus einer Verknüpfung der Datenpolarisation ($\Theta$) eines von einem nachfolgenden Datenelement (51) ausgesendeten Lichts (20) und der Datenpolarisation ($\Theta$) eines von einem vorhergehenden Datenelement (51) ausgesendeten Lichts (20) die zu übertragenden Daten des nachfolgenden Datenelements (51) decodiert.

3. Verfahren nach einem der Ansprüche 1 bis 2, **dadurch gekennzeichnet, dass** die Datenreihe (40) ein Trennelement (59) aufweist, welches Licht (20) mit einer Trennpolarisation oder unpolarisiertes Licht (20) aussendet.

4. Verfahren nach einem der Ansprüche 1 bis 3, **dadurch gekennzeichnet, dass** die Elemente (50, 51, 59) der Datenreihe (40) eine gleiche Länge (L) in der Längsrichtung (X) aufweisen.

5. Verfahren nach einem der Ansprüche 1 bis 4, **dadurch gekennzeichnet, dass**

    die Elemente (50, 51, 59) der Datenreihe (40) eine gleiche Breite (B) in einer Querrichtung (Y) aufweisen, welche rechtwinklig zu der Längsrichtung (X) verläuft.

6. Verfahren nach einem der Ansprüche 1 bis 5
**dadurch gekennzeichnet, dass**

    das Datenfeld (30) eine Mehrzahl von Datenreihen (40) umfasst, wobei
    die Datenreihen (40) in einer Querrichtung (Y) nebeneinander angeordnet sind, welche rechtwinklig zu der Längsrichtung (X) verläuft.

7. System (10) zur Datenübertragung mittels Licht (20), umfassend

    einen Sender (14) zum Aussenden von Licht (20), in welchem die zu übertragenden Daten codiert sind, und einen Empfänger (12) zum Empfangen von von dem Sender (14) ausgesendetem Licht (20), **dadurch gekennzeichnet, dass**
    das System (10) zur Ausführung des Verfahrens nach einem der vorangegangenen Ansprüche eingerichtet ist.

8. System (10) nach Anspruch 7, **dadurch gekennzeichnet, dass** der Sender (14) eine Lichtquelle (8) aufweist, welche das Datenfeld (30) durchstrahlt.

9. System (10) nach Anspruch 8, **dadurch gekennzeichnet, dass** das Datenfeld (30) als Reflektor ausgebildet ist.

10. System (10) nach einem der Ansprüche 7 bis 9, **dadurch gekennzeichnet, dass**

    der Empfänger (12) in oder an einem autonom fahrenden Fahrzeug (25) angeordnet ist, welches
    eine Antriebseinrichtung, einen elektrischen Energiespeicher zur Versorgung der Antriebseinrichtung sowie eine Steuereinheit zur Steuerung der Antriebseinrichtung aufweist.

**Claims**

1. Method for transmitting data by means of light (20), wherein

    a transmitter (14) emits light (20) in which the data to be transmitted are encoded, and a receiver (12) receives light (20) emitted by the transmitter (14), wherein
    the transmitter (14) comprises a data field (30) which has at least one data element (51), wherein
    the at least one data element (51) emits light (20) having a specific data polarisation ($\Theta$), wherein the data to be transmitted are encoded in the data polarisation ($\Theta$) of the light (20) emitted by the at least one data element (51), and wherein
    the receiver (12) comprises a polarisation unit (16) which detects the particular data polarisation ($\Theta$) of the light (20) emitted by the at least one data element (51), and wherein the receiver (12) comprises an evaluation unit (6) which decodes the data to be transmitted of the at least one data element (51) from the data polarisation ($\Theta$),

detected by the polarisation unit (16), of the light (20) emitted by the at least one data element (51), wherein the at least one data element (51) has a data polarisation (Θ) which represents a polarisation direction of the light (20) emitted by the at least one data element (51), and each specific piece of data is uniquely assigned a specific data polarisation (Θ), **characterised in that**

the data field (30) comprises at least one data series (40) which has a plurality of data elements (51), wherein each of the data elements (51) emits light (20) having a specific data polarisation (Θ), and wherein

the polarisation unit (16) detects the data polarisations (Θ) of the light (20) emitted by the data elements (51), and **in that**

the elements (50, 51) of the data series (40) are arranged next to one another in a longitudinal direction (X), and **in that**

the data series (40) has a reference element (50) which emits light (20) having a reference polarisation (Θref), wherein

the polarisation unit (16) detects the reference polarisation (Θref) of the light (20) emitted by the reference element (50), and **in that**

the evaluation unit (16) decodes the data to be transmitted of the data elements (51) from a link between the data polarisations (Θ) of the light (20) emitted by the data elements (51) and the reference polarisation (Θref) of the light (20) emitted by the reference element (50).

2. Method according to claim 1,
   **characterised in that**
   the evaluation unit (6) decodes the data to be transmitted of a subsequent data element (51) from a link between the data polarisation (Θ) of light (20) emitted by the subsequent data element (51) and the data polarisation (Θ) of light (20) emitted by a preceding data element (51).

3. Method according to any of claims 1 to 2,
   **characterised in that**
   the data series (40) has a separating element (59) which emits either light (20) having a separating polarisation or unpolarised light (20).

4. Method according to any of claims 1 to 3,
   **characterised in that**
   the elements (50, 51, 59) of the data series (40) are of the same length (L) in the longitudinal direction (X).

5. Method according to any of claims 1 to 4,
   **characterised in that**
   the elements (50, 51, 59) of the data series (40) are of the same width (B) in a transverse direction (Y) which runs at right angles to the longitudinal direction (X).

6. Method according to any of claims 1 to 5,
   **characterised in that**

   the data field (30) comprises a plurality of data series (40), wherein
   the data series (40) are arranged next to one another in a transverse direction (Y) which runs at right angles to the longitudinal direction (X).

7. System (10) for transmitting data by means of light (20), comprising

   a transmitter (14) for emitting light (20) in which the data to be transmitted are encoded, and
   a receiver (12) for receiving light (20) emitted by the transmitter (14),
   **characterised in that**
   the system (10) is configured for carrying out the method according to any of the preceding claims.

8. System (10) according to claim 7,
   **characterised in that**
   the transmitter (14) has a light source (8) which irradiates the data field (30).

9. System (10) according to claim 8,
   **characterised in that**

the data field (30) is in the form of a reflector.

10. System (10) according to any of claims 7 to 9,
    **characterised in that**
    the receiver (12) is arranged in or on a self-driving vehicle (25) which has a drive apparatus, an electrical energy storage device for powering the drive apparatus and a control unit for controlling the drive apparatus.


## Revendications

1. Procédé de transmission de données au moyen de lumière (20), dans lequel

   un émetteur (14) émet de la lumière (20) au sein de laquelle sont codées les données à transférer, et
   un récepteur (12) reçoit de la lumière (20) émise par l'émetteur (14),
   l'émetteur (14) comprenant un champ de données (30) qui présente au moins un élément de données (51),
   le au moins un élément de données (51) émettant de la lumière (20) avec une polarisation de données ($\Theta$) spécifique, les données à transmettre étant codées dans la polarisation de données ($\Theta$) de la lumière (20) émise par le au moins un élément de données (51), et
   le récepteur (12) comprenant une unité de polarisation (16) qui détecte la polarisation de données ($\Theta$) respective de la lumière (20) émise par le au moins un élément de données (51), et
   le récepteur (12) comprenant une unité d'évaluation (6) qui décode les données à transmettre du au moins un élément de données (51) à partir de la polarisation de données ($\Theta$) détectée par l'unité de polarisation (16) de la lumière (20) émise par le au moins un élément de données (51),
   le au moins un élément de données (51) présentant une polarisation de données ($\Theta$) qui représente une direction de polarisation de la lumière (20) émise par le au moins un élément de données (51), et
   une polarisation de données ($\Theta$) spécifique est associée de manière univoque à chaque date spécifique,
   **caractérisé en ce que**
   le champ de données (30) comprend au moins une série de données (40),
   qui présente une pluralité d'éléments de données (51),
   chacun des éléments de données (51) émettant de la lumière (20) avec une polarisation de données ($\Theta$) spécifique, et
   l'unité de polarisation (16) détectant les polarisations de données ($\Theta$) de la lumière (20) émise par les éléments de données (51), et
   les éléments (50, 51) de la série de données (40) sont agencés les uns à côté des autres dans une direction longitudinale (X), et
   la série de données (40) présente un élément de référence (50) qui émet de la lumière (20) avec une polarisation de référence ($\Theta$ref),
   l'unité de polarisation (16) détectant la polarisation de référence ($\Theta$ref) de la lumière (20) émise par l'élément de référence (50), et
   l'unité d'évaluation (16) décode les données à transférer des éléments de données (51) à partir d'une combinaison des polarisations de données ($\Theta$) de la lumière (20) émise par les éléments de données (51) et de la polarisation de référence ($\Theta$ref) de la lumière (20) émise par l'élément de référence (50).

2. Procédé selon la revendication 1, **caractérisé en ce que**
   l'unité d'évaluation (6) décode les données à transférer de l'élément de données (51) suivant à partir d'une combinaison de la polarisation de données ($\Theta$) d'une lumière (20) émise par un élément de données (51) suivant et de la polarisation de données ($\Theta$) d'une lumière (20) émise par un élément de données (51) précédent.

3. Procédé selon l'une quelconque des revendications 1 à 2, **caractérisé en ce que**
   la série de données (40) présente un élément de séparation (59) qui émet de la lumière (20) avec une polarisation de séparation ou de la lumière non polarisée (20).

4. Procédé selon l'une quelconque des revendications 1 à 3, **caractérisé en ce que**
   les éléments (50, 51, 59) de la série de données (40) présentent une même longueur (L) dans la direction longitudinale (X).

5. Procédé selon l'une quelconque des revendications 1 à 4, **caractérisé en ce que** les éléments (50, 51, 59) de la série de données (40) présentent une même largeur (B) dans une direction transversale (Y) qui est perpendiculaire à la direction longitudinale (X).

6. Procédé selon l'une quelconque des revendications 1 à 5, **caractérisé en ce que**

le champ de données (30) comprend une pluralité de séries de données (40),
les séries de données (40) étant agencées les unes à côté des autres dans une direction transversale (Y) qui est perpendiculaire à la direction longitudinale (X).

7. Système (10) de transmission de données au moyen de lumière (20), comprenant un émetteur (14) permettant d'émettre de la lumière (20) au sein de laquelle sont codées les données à transmettre, et

un récepteur (12) permettant de recevoir la lumière (20) émise par l'émetteur (14), **caractérisé en ce que** le système (10) est conçu pour mettre en œuvre le procédé selon l'une quelconque des revendications précédentes.

8. Système (10) selon la revendication 7, **caractérisé en ce que** l'émetteur (14) présente une source de lumière (8) qui traverse le champ de données (30).

9. Système (10) selon la revendication 8, **caractérisé en ce que** le champ de données (30) est réalisé sous la forme d'un réflecteur.

10. Système (10) selon l'une quelconque des revendications 7 à 9, **caractérisé en ce que**
le récepteur (12) est agencé dans ou sur un véhicule circulant de manière autonome (25) qui présente un dispositif d'entraînement, un accumulateur d'énergie électrique permettant d'alimenter le dispositif d'entraînement et une unité de commande permettant de commander le dispositif d'entraînement.

Fig. 1

Fig. 2

Fig. 3

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102016010999 A1
- DE 102018006988 B3
- US 6310707 B1
- DE 69901158 T2
- EP 1026840 A1
- DE 102014209901 A1
- CN 107831470 A
- EP 0955738 A2
- US 20180240338 A1